# FASCICULE DE BREVET EUROPEEN

(11) **EP 3 427 177 B1**
(45) Date de publication et mention de la délivrance du brevet: **12.05.2021**
(21) Numéro de dépôt: 17715213.9
(22) Date de dépôt: 07.03.2017
(51) Int. Cl.: G06F 21/57, G06F 21/73, G06F 21/44, H04M 1/24

(54) **PROCEDE DE VERIFICATION DE L'INTEGRITE D'UN DISPOSITIF ELECTRONIQUE, ET DISPOSITIF ELECTRONIQUE CORRESPONDANT**
VERFAHREN ZUR ÜBERPRÜFUNG DER INTEGRITÄT EINER ELEKTRONISCHEN VORRICHTUNG UND ENTSPRECHENDE ELEKTRONISCHE VORRICHTUNG
METHOD FOR VERIFYING THE INTEGRITY OF AN ELECTRONIC DEVICE, AND CORRESPONDING ELECTRONIC DEVICE

(30) Priorité: 07.03.2016 FR 1651884
(43) Date de publication de la demande: 16.01.2019
(73) Titulaire: IDEMIA France, 92400 Courbevoie (FR)
(72) Inventeur: FRANCOIS, Axel, 92700 Colombes (FR); SARTORI, Michele, 92700 Colombes (FR)
(74) Mandataire: Cabinet Beau de Loménie
(86) Numéro de dépôt international: PCT/FR2017/050497
(87) Numéro de publication internationale: WO 2017/153670

(56) Documents cités:
- EP-A2- 1 469 369
- US-A1- 2006 253 554
- US-A1- 2012 166 524

## Description

### Arrière-plan de l'invention

L'invention concerne les dispositifs électroniques auxquels on peut connecter et déconnecter des composants, en particulier les dispositifs électroniques mobiles.

Des dispositifs électroniques tels que des téléphones mobiles peuvent être configurés pour que différents composants leur soient connectés ou déconnectés. Il a notamment été proposé des téléphones dits modulaires dans lesquels de nombreux composants peuvent être connectés ou déconnectés tels que : l'appareil photo, le haut-parleur, la mémoire, le lecteur biométrique, etc. Ceci permet, sans changer de téléphone, d'obtenir de nouvelles fonctions, de remplacer des composants défectueux, ou encore d'améliorer les performances du téléphone.

Les dispositifs électroniques tels que les téléphones mobiles sont de plus en plus utilisés pour effectuer des actions qui requièrent un haut niveau de sécurité. Par exemple, les téléphones mobiles peuvent être utilisés pour effectuer des paiements ou encore pour authentifier un utilisateur.

A titre indicatif, on peut concevoir qu'un composant pouvant être connecté ou déconnecté puisse avoir été conçu à des fins frauduleuses, de sorte qu'il constitue un danger pour la sécurité des paiements effectués au moyen du téléphone modulaire.

Aussi, un composant récupéré après un vol ou après la perte de ce composant par son utilisateur initial peut être utilisé par un autre utilisateur sans que cela ne soit souhaité par l'utilisateur initial.

L'utilisation de composants pouvant être connectés ou déconnectés rend donc moins sécurisés les dispositifs électroniques auxquels ils sont connectés.

Aussi, il n'existe pas de moyens de contrôle satisfaisants qui permettent de limiter l'utilisation de certains composants utilisés dans des dispositifs électroniques mobiles.

La présente invention a donc pour but de résoudre les problèmes présentés ci-dessus US2006/253554 A1 décrit un procédé pour lier un composant à un ordinateur. Plus précisément, un composant 52 visible sur la figure 1 est connecté par un port USB ou série à un ordinateur 10. Ensuite, l'ordinateur obtient des informations de configuration 62 (étape 402, figure 5). L'ordinateur élabore ensuite dans l'étape 404 un nouveau « MID » (« Machine identity »). Cette élaboration est réalisée au moyen des informations de configuration 62 qui comportent des identifiants « MPID » (« Machine Part Identifier ») qui semblent être propre au composant. Dans le mode de réalisation de la figure 6, on compare deux MIS, un actuel et un mémorisé. Si une inégalité apparait le composant peut ne pas être utilisé (étape 510). Mais ce document ne décrit pas l'utilisation d'informations personnelles.

US2012/166524 A1 décrit un procédé dans lequel un support déconnectable 22 est connecté à un ordinateur 10. L'ordinateur 10 obtient un identificateur du support (« média identifier », A', paragraphe 101) qui semble lui être propre (figure 5). Ensuite, une valeur C' est élaborée par l'ordinateur à partir de A' et de B », un identifiant de l'ordinateur. Enfin, on vérifie que C' est dans une liste 109B (paragraphe 102) et on en déduit des droits d'utilisateur (« read policy »). Ce document ne décrit en particulier pas d'informations propres à l'utilisateur mémorisées dans une mémoire sécurisée du dispositif électronique ou dans une mémoire d'un élément sécurisé du dispositif ou dans un serveur distant ; en outre, ce document ne décrit pas que ces informations propres à l'utilisateur sont élaborées sur la base d'informations biométriques de l'utilisateur et/ou sur la base d'un code personnel de l'utilisateur du dispositif électronique.

EP 1469369 A2 décrit également un procédé d'identification d'un composant pour un ordinateur. Une donnée appelée « Verbose Hardware identification » (VHWID) est élaborée dans ce procédé. Cette donnée est obtenue par application de fonctions de hachage sur des numéros propres aux composants (« component instances »). Lorsqu'un logiciel est configuré, on compare un VHWID avec un autre déjà enregistré pour déterminer que le système est relativement inchangé (revendication 13). Ce document ne décrit pas l'utilisation d'informations personnelles.

### Objet et résumé de l'invention

Les modes de réalisation décrits ne doivent être considérés qu'à titre illustratif et non limitatif. La portée de l'invention est définie par les revendications annexées, les revendications dépendantes définissent d'autres modes de réalisation de l'invention. La présente invention répond à ce besoin en proposant un procédé de vérification de l'intégrité d'un dispositif électronique auquel est connecté au moins un composant pouvant être connecté ou déconnecté, le procédé comprenant :
une obtention d'informations propres audit au moins un composant pouvant être connecté ou déconnecté mémorisées dans ledit composant pouvant être connecté ou déconnecté,
une élaboration d'une première valeur maître temporaire sur la base desdites informations propres audit au moins un composant pouvant être connecté ou déconnecté,
une authentification de ladite première valeur maître temporaire utilisant une deuxième valeur maître élaborée préalablement pour en déduire que le dispositif électronique est intègre..

En d'autres termes, on vérifie que les informations fournies par le composant pouvant être connecté ou déconnecté permettent d'élaborer une première valeur maître temporaire qui doit par exemple être identique à une deuxième valeur maître ayant été élaborée préalablement. Les deux valeurs peuvent être identiques si par exemple ce sont des clés de chiffrement par clés symétriques, ou encore différentes si ces valeurs sont personnalisées par un mécanisme de clé asymétriques composé d'une paire de clés (clé publique, clé privée). Différents cas sont possibles, mais il est nécessaire qu'une authentification d'une valeur par rapport à l'autre soit réalisable.

Un remplacement du composant pouvant être connecté ou déconnecté provoquera l'élaboration d'une première valeur maître temporaire qui ne pourra pas être authentifiée en utilisant la deuxième valeur maître.

L'utilisation d'une valeur maître permet de mettre en œuvre une authentification dans laquelle les valeurs maîtres sont comparés, mais elle permet également de mettre en œuvre une authentification plus complexe dans laquelle un jeton est chiffré au moyen de chaque valeur maître pour ensuite comparer les résultats.

Aussi, on peut noter que si plusieurs composants pouvant être connectés ou déconnectés sont connectés au dispositif électronique, la première valeur maître temporaire est élaborée sur la base de toutes lesdites informations propres à chaque composant pouvant être connecté ou déconnecté.

On peut noter que si le dispositif électronique n'est pas considéré comme intègre (par exemple si l'authentification échoue), il est possible de placer le dispositif électronique dans un mode de fonctionnement dégradé dans lequel, par exemple, une fonction sécurisée n'est plus disponible, le composant pouvant être connecté ou déconnecté est bloqué, ou encore l'ensemble du dispositif électronique est bloqué. Dans un mode de fonctionnement dégradé, on peut ne rendre disponible qu'une fonction d'appel d'urgence si le dispositif est un téléphone mobile.

Selon un mode particulier de mise en œuvre, le procédé comprend, préalablement à ladite élaboration de la première valeur maître temporaire, une vérification d'un indicateur du dispositif électronique qui indique si le dispositif est verrouillé pour un utilisateur.

On peut noter que si le dispositif n'est pas verrouillé pour un utilisateur, alors il peut ne pas être possible d'utiliser une deuxième valeur maître obtenue préalablement, par exemple si la deuxième valeur maître est liée à l'utilisateur.

Selon un mode particulier de mise en œuvre, lesdites informations propres audit au moins un composant pouvant être connecté ou déconnecté comprennent un identifiant du composant.

Selon un mode particulier de mise en œuvre, ledit indicateur du dispositif électronique qui indique si le dispositif est verrouillé pour un utilisateur est mémorisé dans une mémoire sécurisée du dispositif électronique ou dans une mémoire d'un élément sécurisé du dispositif ou dans un serveur distant.

Selon un mode particulier de mise en œuvre, le procédé comprend en outre une obtention d'informations propres à l'utilisateur du dispositif électronique mémorisées dans ledit composant pouvant être connecté ou déconnecté, et on déduit l'intégrité du dispositif électronique de ladite authentification de ladite première valeur maître temporaire et d'une authentification des informations propre à l'utilisateur du dispositif électronique en utilisant des informations propre à l'utilisateur du dispositif électronique préalablement obtenues.

Dans ce mode de mise en œuvre, le dispositif est associé à un utilisateur, et l'on a mémorisé des informations relatives à cet utilisateur dans le composant pouvant être connecté ou déconnecté.

Cela permet d'éviter qu'un composant associé à un deuxième utilisateur ne soit utilisé dans un dispositif électronique déjà associé à un premier utilisateur.

Ceci permet par exemple de limiter l'utilisation de composants volés ou perdus, et cela limite donc leur revente abusive.

Selon un mode particulier de mise en œuvre, les informations propres à l'utilisateur du dispositif électronique mémorisées dans le composant pouvant être connecté ou déconnecté et les informations propre à l'utilisateur du dispositif électronique préalablement obtenues sont élaborées sur la base d'informations biométriques de l'utilisateur et/ou sur la base d'un code personnel de l'utilisateur du dispositif électronique.

On peut noter qu'en élaborant les informations propres à l'utilisateur, on peut transformer des données personnelles de l'utilisateur de sorte qu'il ne soit pas possible de retrouver un code personnel ou encore des informations biométriques. L'élaboration peut comprendre l'utilisation d'une fonction de hachage (« hash function » en anglais) ou encore l'utilisation d'une fonction de chiffrement.

Selon un mode particulier de mise en œuvre, les informations propres à l'utilisateur sont mémorisées dans une mémoire sécurisée du dispositif électronique ou dans une mémoire d'un élément sécurisé du dispositif ou dans un serveur distant.

Selon un mode particulier de mise en œuvre, lesdites informations propres à l'utilisateur préalablement obtenues sont associées à ladite deuxième valeur maître.

Selon un mode particulier de mise en œuvre, le procédé comprend une vérification d'un indicateur du composant pouvant être connecté ou déconnecté qui indique si le composant est associé au dispositif électronique.

L'indicateur du composant peur être une valeur numérique, par exemple une valeur hexadécimale ou encore un unique bit.

Selon un mode particulier de mise en œuvre, la deuxième valeur maître est mémorisée dans une mémoire sécurisée du dispositif électronique ou dans une mémoire d'un élément sécurisé du dispositif ou dans un serveur distant, et, si la deuxième valeur maître est mémorisée dans le serveur distant, ladite authentification de la première valeur maître temporaire est mise en œuvre par au moins une communication avec ledit serveur distant.

On peut noter que si la valeur maître est mémorisée dans une mémoire sécurisée du dispositif électronique, cette mémoire sécurisée peut être une mémoire qui n'est accessible que par un environnement d'exécution de confiance, par exemple une mémoire dans laquelle les données mémorisées sont stockées.

La valeur maître peut également être mémorisée dans un élément sécurisé.

Un premier type d'élément sécurisé est connu sous l'appellation d'« eSE » (pour « embedded Secure Element ») et visé dans la spécification « GlobalPlatform Card Spécification Version 2.2.1 » relative au standard GlobalPlatform. Ce premier type vise les éléments sécurisés embarqués, c'est-à-dire non amovibles.

Un deuxième type d'élément sécurisé est connu sous l'appellation de carte « UICC » (pour « Universal Integrated Circuit Card ») visée dans le standard « ETSI TS 102 221 » et cette appellation regroupe les cartes à puce classiques amovibles, type carte SIM (ou « USIM » - pour « Universal Subscriber Identity Module »), mais également des jetons (token) sécurisés, tous identifiables de manière unique.

Si la valeur maître est enregistrée dans un élément sécurisé ayant la forme d'une carte à puce, le dispositif de traitement de données inclut un lecteur de cartes lié au mobile et conçu pour recevoir la carte à microcircuit afin de permettre un échange de données.

On peut noter qu'en stockant la valeur maître dans un élément sécurisé, on obtient un bon niveau de sécurité. Un élément sécurisé pouvant être conçu comme un coffre-fort contenant des clés, des certificats, ou des données propres à un utilisateur.

On peut noter que si un environnement d'exécution de confiance est actif dans le dispositif électronique, ce dernier peut être le seul à pouvoir communiquer avec l'élément sécurisé. Dans le procédé tel que défini ci-avant et si un élément sécurisé est utilisé, l'environnement d'exécution de confiance peut mettre en œuvre des fonctions par exemple de chiffrement, et l'élément sécurisé peut être utilisé pour le stockage.

Enfin, on peut noter que les remarques ci-dessus visant la mémorisation de la valeur maître s'appliquent mutatis mutandis à la mémorisation des informations propres à l'utilisateur ou encore à la mémorisation de l'indicateur du dispositif qui indique si le dispositif est verrouillé pour un utilisateur.

Selon un mode particulier de mise en œuvre, on vérifie l'intégrité du dispositif préalablement à la mise en œuvre d'au moins une fonction sécurisée du dispositif électronique.

A titre indicatif, la vérification de l'intégrité du dispositif peut être faite avant d'exécuter une application de paiement qui requiert l'utilisation de fonctions sécurisées du dispositif électronique.

Selon un mode particulier de mise en œuvre, le procédé est mis en œuvre au moins partiellement au moyen d'un environnement d'exécution de confiance.

Un environnement d'exécution de confiance (parfois appelé « TEE » pour « Trusted Execution Environment » en langue anglaise) est un mode de fonctionnement sécurisé d'un dispositif électronique, qui peut être implémenté par le processeur principal du dispositif électronique de manière distincte du système d'exploitation non sécurisé de ce dispositif, c'est-à-dire le système d'exploitation polyvalent(parfois appelé « Rich-OS » en langue anglaise). Cet environnement d'exécution de confiance permet d'exécuter des fonctions sécurisées ou de stocker des données secrètes et sécurisées telles que des clés ou des certificats. Le standard « TEE System Architecture V1.0 | GPD SPE 009 » de Global Platform décrit de tels environnements d'exécution de confiance. A titre indicatif, un environnement d'exécution de confiance peut au moins mettre en œuvre des fonctions cryptographiques telles que définies par le standard Global Platform.

Selon un mode particulier de mise en œuvre, le procédé le dispositif est équipé d'un système d'exploitation polyvalent et le procédé comporte une étape initiale de basculement du système d'exploitation polyvalent vers l'environnement d'exécution de confiance.

Selon un mode particulier de mise en œuvre, le procédé comprend les étapes préalables suivantes :
une connexion dudit composant pouvant être connecté ou déconnecté au dispositif électronique,
une obtention desdites informations propres audit au moins un composant pouvant être connecté ou déconnecté mémorisées dans ledit composant pouvant être connecté ou déconnecté,
une élaboration de ladite deuxième valeur maître sur la base desdites informations propres audit au moins un composant pouvant être connecté ou déconnecté.

Ce mode particulier de mise en œuvre comporte donc la connexion du composant pouvant être connecté ou déconnecté.

Selon un mode particulier de mise en œuvre dans lequel on vérifie ledit indicateur du dispositif électronique qui indique si le dispositif est verrouillé pour un utilisateur lors d'une vérification d'intégrité, on vérifie que l'indicateur du dispositif électronique qui indique si le dispositif est verrouillé pour un utilisateur indique que le dispositif n'est pas verrouillé pour un utilisateur avant l'élaboration de ladite deuxième valeur maître.

Ce mode de réalisation permet d'autoriser la connexion d'un nouveau composant que dans des cas choisis, par exemple lors de la première connexion d'un composant au dispositif électronique. Aussi, ce mode de mise en œuvre vise la création de la deuxième valeur maître, et les étapes visées par ce mode de mise en œuvre sont donc mises en œuvre avant l'authentification d'une valeur maître temporaire.

Selon un mode en mise en œuvre dans lequel on vérifie un indicateur du composant pouvant être connecté ou déconnecté qui indique si le composant est associé au dispositif électronique lors d'une vérification d'intégrité, si l'indicateur du dispositif électronique qui indique si le dispositif est verrouillé pour un utilisateur indique que le dispositif n'est pas verrouillé pour un utilisateur, on attribue audit indicateur du composant pouvant être connecté ou déconnecté un état qui indique que le composant est associé au dispositif électronique postérieurement à ladite élaboration de ladite deuxième valeur maître.

Selon un mode particulier de mise en œuvre dans lequel on obtiendra des informations propres à l'utilisateur du dispositif lors d'une vérification d'intégrité, le procédé comprend une élaboration préalable desdites informations propres à l'utilisateur dans laquelle l'utilisateur interagit avec le dispositif électronique, et un enregistrement desdites informations propres à l'utilisateur dans au moins ledit composant pouvant être connecté ou déconnecté.

Selon un mode particulier de mise en œuvre, on déconnecte ledit composant pouvant être connecté ou déconnecté (par exemple postérieurement à la vérification de l'intégrité).

Selon un mode particulier de mise en œuvre dans lequel ledit indicateur du composant est utilisé, préalablement à ladite déconnexion, on attribue audit indicateur du composant pouvant être connecté ou déconnecté un état qui indique que le composant n'est pas associé au dispositif électronique.

Ainsi, dans un dispositif électronique ayant été considéré comme intègre, on peut rendre possible la connexion du composant à un autre dispositif électronique en modifiant l'état de l'indicateur du composant.

Selon un mode particulier de mise en œuvre dans lequel on vérifie un indicateur du composant pouvant être connecté ou déconnecté qui indique si le composant est associé au dispositif électronique lors d'une vérification d'intégrité, pour attribuer audit indicateur du composant pouvant être connecté ou déconnecté un état qui indique que le composant n'est pas associé au dispositif électronique, le procédé comporte :
une élaboration desdites informations propres à l'utilisateur dans laquelle l'utilisateur interagit avec le dispositif électronique, et une comparaison desdites informations propres à l'utilisateur élaborées avec celles préalablement obtenues.

Ainsi, seul l'utilisateur véritable du dispositif électronique peut libérer un composant.

Selon un mode particulier de mise en œuvre, on détecte une erreur et l'on bloque le dispositif électronique, ou on fait fonctionner le dispositif électronique dans un mode de fonctionnement dégradé, ou on bloque ledit au moins un composant pouvant être connecté ou déconnecté.

Selon un mode particulier de mise en œuvre, la valeur maître est une valeur d'un type choisi dans le groupe comprenant : une clé, un jeton, le résultat d'une fonction de hachage, et le résultat d'une fonction cryptographique.

L'invention propose également un dispositif électronique auquel on peut connecter au moins un composant pouvant être connecté ou déconnecté, le dispositif comprenant :
un module d'obtention d'informations propres audit au moins un composant pouvant être connecté ou déconnecté mémorisées dans ledit composant pouvant être connecté ou déconnecté,
un module d'élaboration d'une première valeur maître temporaire sur la base desdites informations propres audit au moins un composant pouvant être connecté ou déconnecté,
un module d'authentification de ladite première valeur maître temporaire utilisant une deuxième valeur maître élaborée préalablement pour en déduire que le dispositif électronique est intègre.

Ce dispositif électronique peut être configuré pour la mise en œuvre de chacun des modes de mise en œuvre du procédé tel que défini ci-avant.

Selon un mode particulier de réalisation, le dispositif électronique est un dispositif électronique mobile.

Ce dispositif électronique mobile peut être un téléphone mobile, un objet connecté (par exemple une montre connectée), un véhicule motorisé (par exemple un drone).

### Brève description des dessins

D'autres caractéristiques et avantages de la présente invention ressortiront de la description faite ci-dessous, en référence aux dessins annexés qui en illustrent un exemple dépourvu de tout caractère limitatif.

Sur les figures :

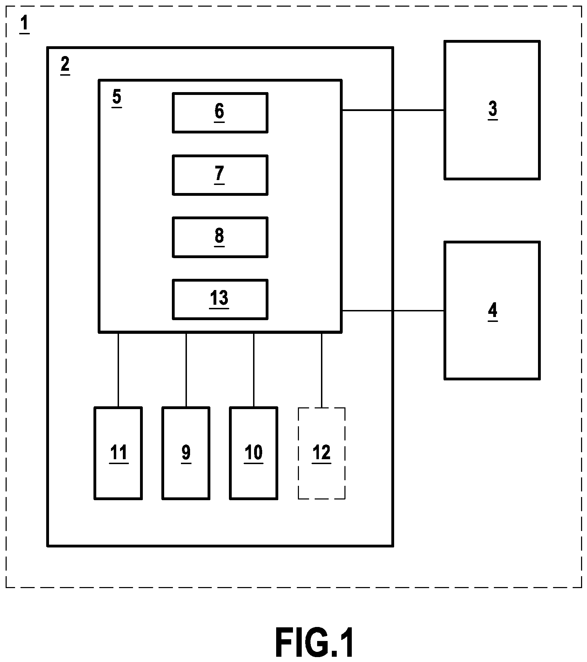

- la figure 1 représente de façon schématique un dispositif électronique selon un mode de réalisation de l'invention,

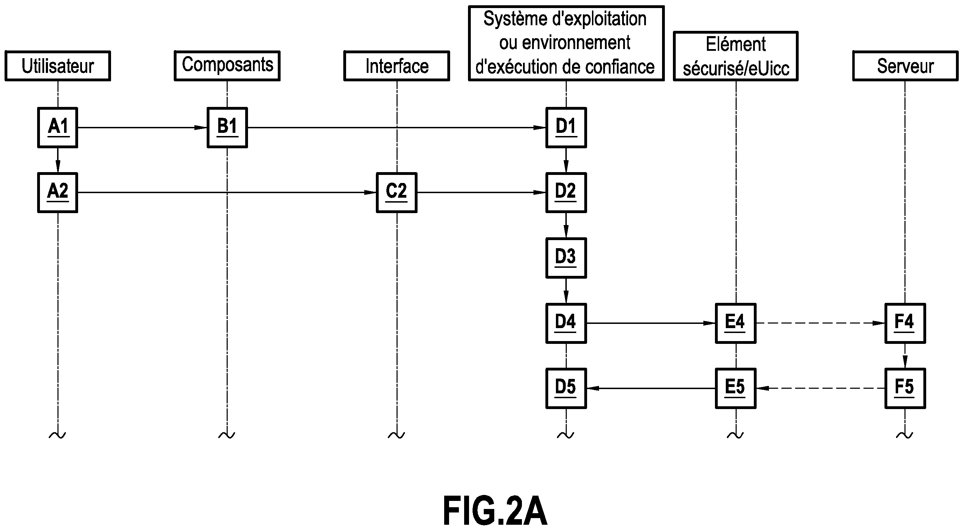

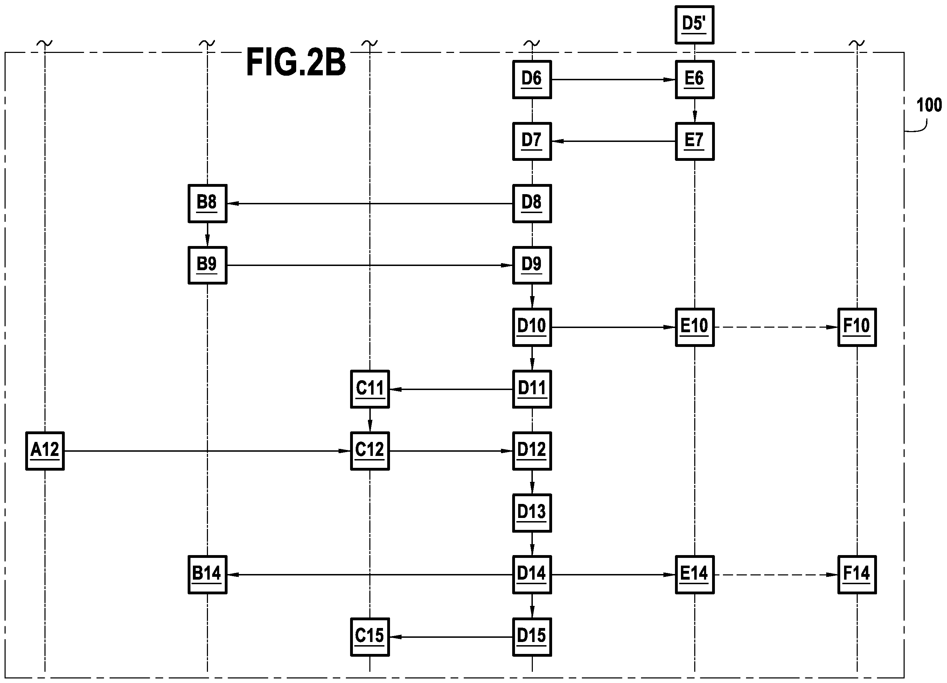

- les figures 2A et 2B représente différentes étapes préalables mises en œuvre lors de la connexion d'un composant à un dispositif électronique,

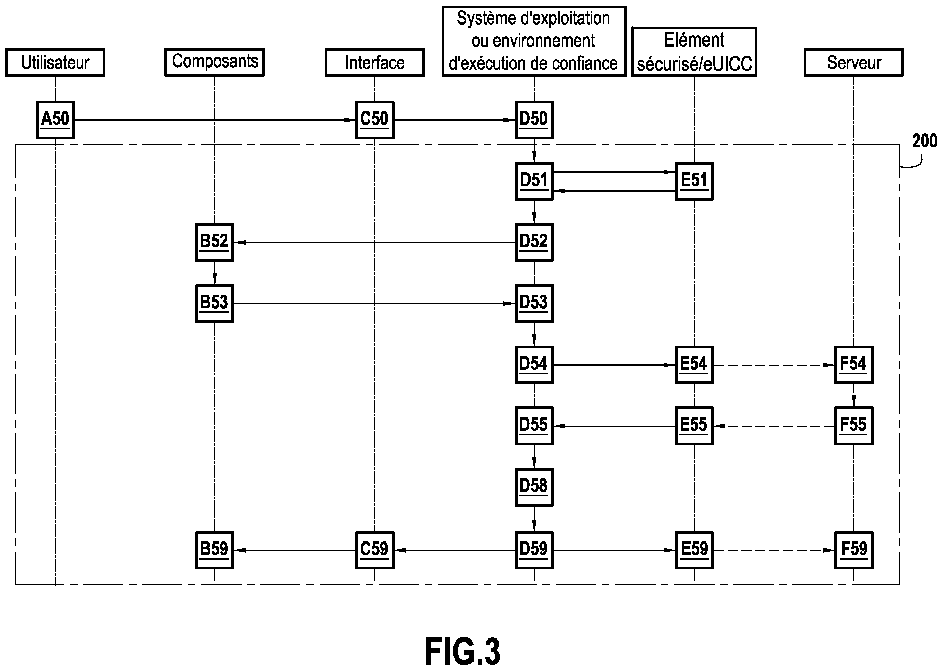

- la figure 3 représente différentes étapes d'un procédé de vérification de l'intégrité d'un dispositif électronique,

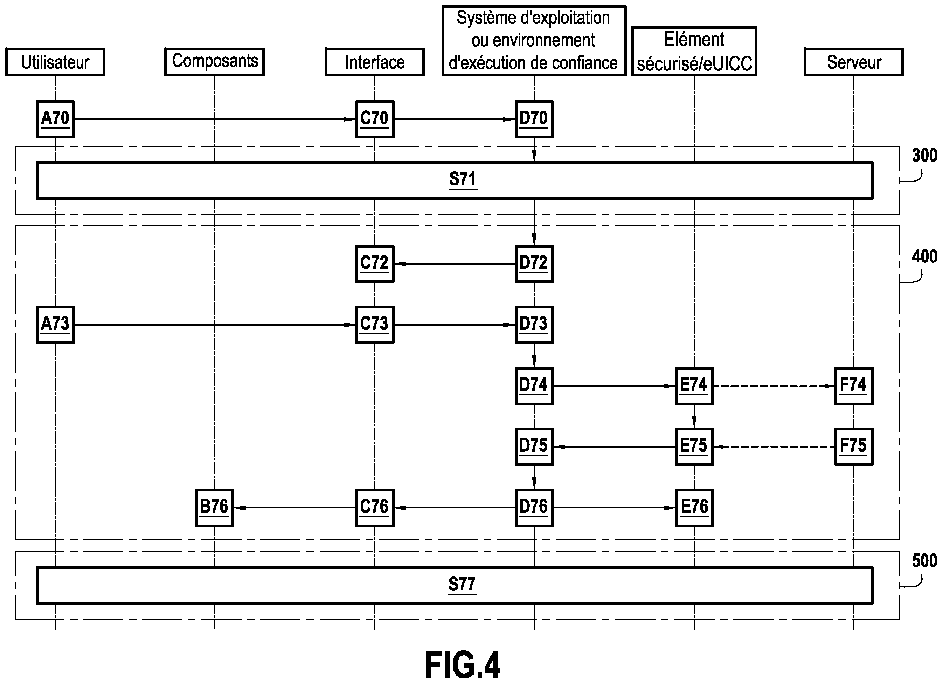

- la figure 4 représente différentes étapes d'un procédé dans lequel on déconnecte un composant.

### Description détaillée d'un mode de réalisation

Sur la figure 1, on a représenté de manière schématique un téléphone mobile modulaire 1. L'invention n'est néanmoins pas limitée aux téléphones mobiles modulaires et ce qui suit peut être appliqué à d'autres types de dispositifs électroniques auxquels on peut connecter ou déconnecter des composants, notamment des dispositifs mobiles (par exemple objet connecté, véhicule motorisé, etc).

Ici, le téléphone 1 comporte une carte mère 2 sur laquelle on monte des composants de manière permanente ou non.

Dans l'exemple illustré, des composants 3 et 4 ont été connectés au reste du dispositif par une connexion à la carte mère 2. Les composants 3 et 4 peuvent être choisis, par exemple, parmi un appareil photo, un haut-parleur, une mémoire volatile (RAM) ou non volatile (ROM ou Flash), un lecteur biométrique, un processeur (CPU), un processeur graphique (GPU), un écran (par exemple LCD ou OLED ou LED ou à encre électronique), une interface homme machine (par exemple des boutons, une zone tactile, etc), etc.

La carte mère 2 est munie d'un environnement d'exécution de confiance 5 (de type « TEE »), et il convient de noter que ce dernier a été représenté simplifié sans que soit apparents de manière distincte les aspects matériels (hardware) et logiciels (software) d'un environnement d'exécution de confiance. La carte mère 2 est également munie d'un système d'exploitation polyvalent 11 (de type « Rich-OS »), le dispositif électronique pouvant basculer du système d'exploitation polyvalent vers l'environnement d'exécution de confiance pour mettre en œuvre des fonctions sécurisées.

Le basculement du système d'exploitation polyvalent à l'environnement d'exécution de confiance (ou inversement) est réalisé par un élément logiciel désigné par l'homme du métier par l'expression anglaise « Secure Monitor » (moniteur sécurisé en français, non représenté ici) et qui permet le passage d'un mode à l'autre.

Par exemple le système d'exploitation polyvalent peut demander le lancement d'une application sécurisée exécutée par l'environnement d'exécution de confiance. Le système d'exploitation polyvalent envoie alors une requête au « Secure Monitor » avec l'identifiant de l'application sécurisée à exécuter par l'environnement d'exécution de confiance. Si l'identifiant est valide, le « Secure Monitor » lance le basculement vers l'environnement d'exécution de confiance et l'application est exécutée. A la fin de l'exécution de cette application sécurisée, on peut basculer vers le mode d'exécution correspondant au système d'exploitation polyvalent.

Ici, l'environnement d'exécution de confiance 5 comporte :
- un module 6 d'obtention d'informations propres à chaque composant 3 ou 4 pouvant être connecté ou déconnecté et mémorisées dans chaque composant 3 ou 4 pouvant être connecté ou déconnecté,
- un module 7 d'élaboration d'une première valeur maître temporaire sur la base desdites informations propres aux composants pouvant être connectés ou déconnectés,
- un module 8 d'authentification de ladite première valeur maître temporaire utilisant une deuxième valeur maître élaborée préalablement pour en déduire que le téléphone mobile 1 est intègre,
- un module 13 capable d'exécuter des fonctions de sécurité (par exemple des fonctions cryptographiques ; ce module correspond par exemple au noyau d'un environnement d'exécution de confiance.

D'autres composants ont été représentés sur la figure 1, notamment un élément sécurisé 9 de type UICC ou eUICC (acronymes anglo-saxon bien connus de l'homme du métier signifiant « Universal Integrated Circuit Card » ou « embedded « Universal Integrated Circuit Card » »). L'élément sécurisé 9 de type eUICC est monté sur la carte mère 2 et communique avec l'environnement d'exécution de confiance 5 et il permet notamment d'authentifier le téléphone mobile 1 sur un réseau de communication mobile. On notera que la communication entre l'élément sécurisé 9 de type eUICC ou l'élément sécurisé 12 de type eSE et l'environnement d'exécution de confiance 5 est réalisée au moyen d'un canal de sécurité de type SCP11 décrit dans la norme Global Platform.

De manière optionnelle, la carte mère 2 peut être munie d'un élément sécurisé supplémentaire 12 de type eSE. Cet élément sécurisé supplémentaire 12 peut être utilisé pour la mémorisation :
- De la deuxième valeur maître,
- Des informations propres à l'utilisateur,
- De l'indicateur du dispositif électronique.

L'élément sécurisé supplémentaire 12 de type eSE peut être utilisé pour mettre en œuvre des opérations cryptographiques, telles que des opérations d'authentification ou d'identification qui sont analogues aux opérations qui peuvent être mises en œuvre par le module 13. Par exemple, l'élément sécurisé supplémentaire 12 peut être utilisé pour authentifier les valeurs maîtres.

Alternativement, et en l'absence de l'élément sécurisé, la deuxième valeur maître, les informations propres à l'utilisateur et l'indicateur du dispositif électronique peuvent notamment être mémorisées dans une mémoire sécurisée de l'environnement d'exécution de confiance (dans laquelle les informations sont chiffrées) ou encore dans une mémoire de l'élément sécurisé 9. Dans un autre mode de mise en œuvre possible, ces informations sont mémorisées dans un serveur distant.

Le serveur peut également effectuer des opérations cryptographiques, comme par exemple l'authentification des valeurs maître. On notera que les communications entre le serveur distant et le dispositif sont éventuellement sécurisées, par exemple chiffrées, pour obtenir un bon niveau de sécurité pour les informations communiquées.

Pour permettre cette mémorisation dans un serveur distant, le téléphone mobile 1 est également équipé de moyens de communication 10, par exemple une antenne.

Dans ce qui suit, on a décrit des étapes d'un procédé selon l'invention mise en œuvre par un dispositif électronique tel que le téléphone mobile décrit en référence à la figure 1. Dans les figures 2A à 4, le dispositif électronique n'est équipé que d'un seul élément sécurisé de type eUICC qui est également utilisé pour la mémorisation d'informations.

Sur les figures 2A et 2B, on a représenté différentes étapes mises en œuvre avant la vérification de l'intégrité d'un dispositif électronique (par exemple le téléphone mobile de la figure 1). Ces étapes sont mises en œuvre lors de la connexion d'un nouveau composant.

L'exemple des figures 2A et 2B vise tout particulièrement la configuration d'un nouveau dispositif électronique assemblé avec des composants pour la première fois.

Dans une première étape A1, l'utilisateur sélectionne un ou plusieurs composants (étape B1) et ces composants sont connectés au reste du dispositif électronique. Les composants sont reçus par dispositif électronique à l'étape D1.

Ensuite, l'utilisateur allume le dispositif électronique à l'étape A2, par une interface homme-machine qui est manipulée à l'étape C2. Le système d'exploitation (de type Rich-OS) est alors activé (étape D2).

A l'étape D3, le système d'exploitation vérifie que tous les composants nécessaires pour un fonctionnement normal de ce système lui sont connectés.

Ensuite, le dispositif électronique (ici un téléphone mobile), vérifie la présence d'un élément sécurisé permettant la connexion au réseau de communication mobile (en d'autres termes, il vérifie la présence d'un élément eUICC), puis il cherche à s'authentifier sur un réseau de communication mobile à travers l'élément sécurisé (étape E4) et un serveur distant (étape F4), le serveur distant pouvant être un opérateur de réseau mobile (« MNO : Mobile Network Operator » en langue anglaise). L'authentification sur un réseau de communication mobile est mise en œuvre de manière sécurisée (par exemple par un partage de clés).

A l'étape D5, le système d'exploitation reçoit la confirmation de l'élément sécurisé (émise à l'étape E5) qu'une connexion minimale avec l'opérateur de réseau mobile est activée (par exemple pour obtenir la possibilité d'émettre des appels d'urgence, ou mettre en œuvre certaines étapes de la vérification de l'intégrité du dispositif électronique).

On peut noter que les étapes D4 à D5 correspondent à l'authentification classique d'un dispositif électronique équipé d'un élément sécurisé de type eUICC.

Ultérieurement l'étape D5' est mise en œuvre. Dans cette étape, le système d'exploitation polyvalent demande l'exécution des fonctions ou d'une application de l'environnement d'exécution de confiance qui sont mises en œuvre avant la vérification de l'intégrité d'un dispositif électronique.

Suite à cette demande du système d'exploitation polyvalent (par exemple à un « Secure Monitor »), le dispositif électronique bascule dans un mode dans lequel l'environnement d'exécution de confiance est actif et capable d'exécuter des applications ou des fonctions. Cela est délimité par le cadre en trait mixte 100. Lorsque l'environnement d'exécution de confiance est actif, on a un bon niveau de sécurité et de confidentialité permettant d'utiliser des fonctions de sécurité.

On notera que par abus de langage et pour des raisons de simplicité, on ne distingue pas dans ce qui suit l'environnement d'exécution de confiance d'une application ou de fonctions exécutées par cet environnement d'exécution de confiance.

A l'étape D6, l'environnement d'exécution de confiance vérifie que le dispositif électronique est effectivement utilisé pour la première fois, et cela est mis en œuvre en émettant une requête à l'élément sécurisé pour que l'élément sécurisé vérifie, à l'étape E6 :
- qu'un indicateur du dispositif électronique mémorisé dans l'élément sécurisé indique que le dispositif n'est pas verrouillé pour un utilisateur (s'il s'agit d'un flag, ce flag peut se lire « faux » ; l'indicateur peut également être un bit de sécurité ou une valeur numérique telle qu'une valeur hexadécimale),
- que le code PIN (« Personal Identification Number » en anglais) est bien 0000, ce qui correspond au code enregistré dans les appareils avant leur première utilisation,
- que la valeur d'une valeur maître indique que la valeur maître n'a pas encore été élaborée (par exemple si elle a une valeur prédéterminée telle que 00FA en hexadécimal).

On peut noter qu'ici, c'est dans l'élément sécurisé de type eUICC que l'on effectue ces vérifications, mais cela peut également être mis en œuvre :
- dans un élément sécurisé de type eSE si le dispositif électronique comporte un tel élément sécurisé, ou
- dans l'environnement d'exécution de confiance 5 (par exemple au moyen des modules 6 à 13), les informations utilisées pour les vérifications étant alors mémorisées dans une mémoire sécurisée accessible uniquement par l'environnement d'exécution de confiance.

Certaines vérifications de l'étape E06 sont optionnelles et l'homme du métier saura choisir quels tests mettre en œuvre.

A l'étape E7, l'élément sécurisé communique les résultats des vérifications à l'environnement d'exécution de confiance qui les reçoit à l'étape D7.

L'environnement d'exécution de confiance peut maintenant élaborer une deuxième valeur maître. Cette deuxième valeur maître sera ici mémorisée dans l'élément sécurisé de type eUICC mais il est également possible de la mémoriser dans un élément sécurisé de type eSE si le dispositif électronique est équipé d'un tel élément sécurisé ou encore en l'absence d'élément sécurisé être mémorisée dans une mémoire sécurisée de l'environnement d'exécution de confiance (dans laquelle les informations sont chiffrées). A cet effet, l'environnement d'exécution de confiance demande (étape D8) aux composants des informations qui leur sont propres. Cette demande est reçue par les composants à l'étape B8.

A titre indicatif, les informations propres aux composants peuvent comprendre : une adresse MAC (« Media Access Control » en langue anglaise), un identifiant UUID (« Universally Unique Identifier » en langue anglaise), un code IMEI (« International Mobile Equipment Identity » en langue anglaise), le résultat d'une fonction physique non clonable (« PUF : Physical Unclonable Function » en langue anglaise), ou encore toute autre information permettant d'identifier de manière unique le composant.

A l'étape B9, les composants envoient les informations qui leur sont propres à l'environnement d'exécution de confiance.

L'environnement d'exécution de confiance envoie à l'étape D10 les informations propres aux composants à l'élément sécurisé qui élabore et enregistre (étape E10) une deuxième valeur maître sur la base de ces informations propres aux composants en utilisant un algorithme de cryptographie. De manière alternative, un module de l'environnement d'exécution de confiance peut élaborer la deuxième valeur maître qui peut ensuite soit être mémorisée dans une mémoire sécurisée de l'environnement d'exécution de confiance, soit être mémorisée dans l'élément sécurisé de type eUICC, soit être mémorisée dans un élément sécurisé de type eSE si un tel élément sécurisé est présent.

Dans une autre alternative, la deuxième valeur maître n'est ni élaborée par l'élément sécurisé ni enregistrée dans l'élément sécurisé, et l'étape E10 comporte l'envoi à un serveur distant qui élabore et enregistre la deuxième valeur maître (étape F10). Le serveur peut également ne faire qu'élaborer la deuxième valeur maître et la renvoyer au dispositif électronique pour sa mémorisation.

Ensuite, l'environnement d'exécution de confiance indique à l'utilisateur, au moyen de l'interface homme machine, que des informations telles qu'un code personnel ou des informations d'identification nominatives ou des informations biométriques sont nécessaires (étapes D11 et C11). L'interface homme machine peut comprendre un écran sur lequel un message est indiqué pour demander à l'utilisateur de saisir un code personnel (par exemple un nouveau code PIN) ou des informations biométriques.

A l'étape A12, l'utilisateur interagit avec l'interface et saisit des informations telles qu'un code PIN ou des informations biométriques reçues par l'interface homme machine à l'étape C12. On peut noter qu'un code PIN ou des informations biométriques sont des donnés qui sont personnelles et propres à l'utilisateur.

Ces informations sont ensuite transmises à l'environnement d'exécution de confiance qui les reçoit (étape D12).

A l'étape D13, l'environnement d'exécution de confiance élabore des informations propres à l'utilisateur du dispositif, par exemple au moyen d'une fonction de hachage ou de chiffrement. Cette élaboration peut être réalisée également au moyen d'une fonction de hachage ou de chiffrement de l'élément sécurisé ou du serveur.

A l'étape D14 :
- l'environnement d'exécution de confiance demande que l'indicateur du dispositif électronique mémorisé dans l'élément sécurisé indique que le dispositif est verrouillé pour un utilisateur (étape E14).
- les informations propres à l'utilisateur sont envoyées à l'élément sécurisé qui les enregistre (étape E14 également) associées à la deuxième valeur maître si elle a été enregistrée dans l'élément sécurisé, ou alors l'élément sécurisé les envoie au serveur qui les enregistre (étape F14) associées à la deuxième valeur maître si elle a été enregistrée dans le serveur, et
- l'environnement d'exécution de confiance envoie les informations propres à l'utilisateur à chaque composant, et change l'état d'un indicateur dans chaque composant pour indiquer que chaque composant est associé à ce dispositif électronique (étape B14).

L'environnement d'exécution de confiance peut ensuite, à l'étape D15, indiquer à l'utilisateur par l'interface homme machine que la configuration du nouveau dispositif électronique a été effectuée correctement. L'interface homme machine peut par exemple afficher un message en ce sens (étape C15).

Après l'étape C15, le dispositif électronique fonctionne de manière analogue à un téléphone mobile classique. Il peut par exemple être demandé à l'utilisateur de saisir son code PIN pour s'authentifier auprès de l'opérateur de réseau mobile.

La figure 3 correspond à une vérification de l'intégrité d'un dispositif électronique ayant déjà été configuré par les étapes du procédé décrit en se référant aux figures 2A et 2B.

Dans une première étape A50, l'utilisateur demande, au moyen de l'interface homme machine, la mise en œuvre d'une fonction sécurisée du dispositif électronique. Cette fonction sécurisée peut être une fonction liée à un paiement.

A l'étape C50, l'interface homme machine retransmet la demande de l'utilisateur au système d'exploitation polyvalent qui la reçoit et qui met en œuvre l'étape D50. A l'étape D50, le système d'exploitation polyvalent demande l'exécution de fonctions de l'environnement d'exécution de confiance (qui correspondent à la fonction sécurisée demandée par l'utilisateur). Ceci provoque le basculement vers le mode dans lequel l'environnement d'exécution de confiance est actif (cadre en trait mixte 200) et ceci provoque également la mise en œuvre de la vérification de l'intégrité du dispositif électronique.

Aux étapes D51 et E51, l'environnement d'exécution de confiance vérifie que l'indicateur du dispositif électronique stocké dans l'élément sécurisé indique que le dispositif est verrouillé pour un utilisateur (cet état ayant été attribué à l'étape E14 décrite en référence aux figures 2A et 2B).

On peut noter qu'il est possible, à ce stade, de vérifier une signature de l'application correspondant au procédé de vérification de l'intégrité du dispositif mise en œuvre par l'environnement d'exécution de confiance. Cette vérification de signature est mise en œuvre pour les applications s'exécutant au moyen d'un environnement d'exécution de confiance pour vérifier leur intégrité.

L'environnement d'exécution de confiance peut ensuite, à l'étape D52, demander aux composants connectés au dispositif électronique des informations qui leur sont propres ainsi que les informations propres à l'utilisateur du dispositif électronique (qui ont été enregistrées à l'étape B14 décrite en référence aux figures 2A et 2B). Aussi, à l'étape D52, on peut demander aux composants l'état des indicateurs des composants qui indiquent s'ils sont associés au dispositif électronique. Cette demande est reçue à l'étape B52. A l'étape B53, les composants envoient ces informations à l'environnement d'exécution de confiance qui les reçoit à l'étape D53.

L'environnement d'exécution de confiance va ensuite transmettre (étape D54) ces informations à l'élément sécurisé pour élaborer (étape E54) une première valeur maître temporaire sur la base des informations propres aux composants et authentifier cette première valeur maître temporaire en utilisant la deuxième valeur maître ayant été enregistrée dans l'élément sécurisé ou dans le serveur (étape F54). Aussi, à ces étapes E54 et F54, on authentifie les informations propres à l'utilisateur du dispositif électronique par comparaison des informations reçues des modules et de celles mémorisées préalablement.

L'authentification de la première valeur maître temporaire peut être faite en comparant les deux valeurs ou encore en utilisant les valeurs (qui peuvent être des clés) pour signer des données et les comparer. L'authentification peut également être mise en œuvre au moyen du serveur si ce dernier mémorise la deuxième valeur maître.

A l'étape E55 (ou F55 si le serveur est utilisé), on envoie le résultat de l'authentification à l'environnement d'exécution de confiance qui le reçoit à l'étape D55.

On peut noter que l'authentification peut également être mise en œuvre par l'environnement d'exécution de confiance.

Ensuite, à l'étape D58, la fonction sécurisée demandée par l'utilisateur à l'étape A50 est mise en œuvre, le dispositif électronique ayant eu son intégrité vérifiée. Cette mise en œuvre peut être accompagnée par l'affichage d'une information sur l'interface pour indiquer à l'utilisateur que l'intégrité a été vérifiée. Cette mise en œuvre peut également être accompagnée par l'activation d'un ou de plusieurs modules, préférentiellement des composants utilisés par l'application. A titre indicatif, pour une application de paiement sans contact par communication en champ proche NFC (« Near Field Communication » en langue anglaise), un composant NFC pouvant être connecté ou déconnecté peut être débloqué ou activé.

Les étapes qui suivent illustrent le cas où l'intégrité du dispositif électronique n'est pas vérifiée parce qu'une erreur a été détectée. A titre indicatif, cette erreur peut résulter du remplacement d'un ou de plusieurs composants pouvant être connecté(s) ou déconnecté(s) par un ou plusieurs autres composants. En effet, en cas de remplacement, les informations propres au nouveau composant sont différentes, les informations propres à l'utilisateur stockées dans le composant sont différentes, et il en découle que la première valeur maître temporaire sera différente de celle attendue. L'authentification n'est donc pas possible dans ce cas.

A l'étape D59, l'environnement d'exécution de confiance indique que la vérification d'intégrité a échoué sur l'interface homme machine (étape C59), et l'indicateur du composant (s'il est possible de l'identifier, par exemple s'il est unique) est changé pour indiquer que le composant n'est pas associé au dispositif électronique. Aussi, à l'étape E59 (ou F59 si un serveur est utilisé), on attribue à l'indicateur du dispositif un état qui indique que le dispositif n'est pas verrouillé pour un utilisateur. Cet indicateur peut être envoyé au serveur distant avec la liste des composants connectés au dispositif pour par exemple vérifier si ces composants figurent dans une liste noire de composants qui ne doivent pas être réutilisés.

D'autres actions peuvent être mises en œuvre si une erreur a été détectée. Il est notamment possible de bloquer complément le dispositif électronique, ou permettre son utilisation partielle. Il est également possible de bloquer l'utilisation d'un ou de plusieurs composants pouvant être connectés ou déconnectés à l'étape B59 (là, une information dans les composants à bloquer peut être inscrite pour indiquer l'état bloqué, et cette information peut être envoyée au serveur distant pour que les composants soient ajoutés à une liste noire de composants).

Sur la figure 4, on a représenté les différentes étapes du remplacement d'un composant pouvant être connecté ou déconnecté.

Dans une première étape A70, l'utilisateur indique, au moyen de l'interface homme machine (étape C70), qu'il souhaite remplacer un composant pouvant être connecté ou déconnecté. Cela est notifié au système d'exploitation polyvalent qui demande le basculement vers l'environnement d'exécution de confiance par une demande au « secure monitor » (cadre en trait mixte 300). Alternativement, cette demande de remplacement d'un composant peut provenir d'un serveur (par exemple par l'opérateur de réseau mobile) pour faire suite au blocage par erreur d'un composant ou d'un dispositif électronique.

L'étape S71 est alors mise en œuvre et cette étape comprend une vérification de l'intégrité du dispositif électronique telle que décrite en se référant à la figure 3, quand l'environnement d'exécution de confiance est actif.

Au moyen d'un environnement d'exécution de confiance actif (cadre en trait mixte 400), on met en œuvre une étape D72 dans laquelle on indique par l'interface que l'intégrité a été vérifiée et que l'utilisateur est invité à saisir un code personnel ou des informations biométriques (étape C72).

A l'étape A73, l'utilisateur interagit avec l'interface homme machine (étape C73) pour saisir un code personnel ou des informations biométriques. Et ces informations sont envoyées à l'environnement d'exécution de confiance qui les reçoit (étape D73).

A l'étape D74, l'environnement d'exécution de confiance élabore des informations propres à l'utilisateur sur la base des informations reçues par l'interface homme machine, l'environnement d'exécution de confiance demande à l'élément sécurisé d'authentifier les informations reçues, et l'élément sécurisé effectue cette authentification avec les informations propres à l'utilisateur déjà enregistrées dans l'élément sécurisé (étape E74). A l'étape E75, l'élément sécurisé renvoie le résultat de l'authentification à l'environnement d'exécution de confiance qui le reçoit à l'étape D75. On peut noter qu'il est possible de mettre en œuvre l'élaboration ou l'enregistrement des informations propres à l'utilisateur au sein de l'environnement d'exécution de confiance, au sein d'un élément sécurisé, ou au sein d'un serveur (étapes optionnelles F74 et F75). On peut également noter que les communications entre l'environnement d'exécution de confiance, l'élément sécurisé, et le serveur peuvent être mises en œuvres au moyen des protocoles de sécurité connus de la norme Global Platform SCP80 ou SCP81, avec des données chiffrées selon le protocole SCP02 ou SCP03.

A l'étape D76, l'environnement d'exécution de confiance :
- indique à l'interface homme machine que la déconnexion du ou des composants est possible (étape C76), et attribue à l'indicateur des composants un état qui indique qu'ils ne sont pas associés au dispositif électronique (étape B76). L'environnement d'exécution de confiance demande également le changement d'état de l'indicateur du dispositif électronique mémorisé dans l'élément sécurisé pour indiquer que le dispositif n'est pas verrouillé pour un utilisateur (étape E76 ; cette étape pouvant également être mise en œuvre au moyen du serveur),
- alternativement, si l'authentification des informations propres à l'utilisateur échoue, l'environnement d'exécution de confiance l'indique à l'interface homme machine (étape C76) et laisse (étape B76) dans ces composants l'indicateur indiquant que les composants sont associés au dispositif électronique, de sorte qu'ils ne soient pas utilisables dans un autre dispositif électronique. L'environnement d'exécution de confiance maintient également l'indicateur indicateur indiquant que le dispositif est verrouillé pour un utilisateur (étape E76 ; cette étape pouvant également être mise en œuvre au moyen du serveur),

Ensuite, une étape S77 est mise en œuvre dans laquelle l'utilisateur manipule les composants, les enlève et les remplace, et il met en œuvre des étapes analogues à celles décrites en référence aux figures 2A et 2B dans laquelle un dispositif électronique est configuré pour la première fois. Ces étapes sont faites alors que l'environnement d'exécution de confiance est actif (cadre en trait mixte 500). On notera qu'il y a une variante par rapport aux étapes des figures 2A et 2B : il n'est plus nécessaire de vérifier que le code PIN est 0000 (première utilisation du dispositif électronique).

Aussi, l'enlèvement de certains composants peut être mis en œuvre alors que le dispositif reste allumé. Tel est le cas pour les composants les moins essentiels. Pour des composants plus essentiels tels qu'un processeur (CPU), un redémarrage peut être mis en œuvre.

Il convient de noter que dans les exemples présentés ci-avant, il est possible de ne pas faire intervenir l'élément sécurisé, l'environnement d'exécution de confiance pouvant, dans des modes de mise en œuvre, réaliser à la fois les opérations d'élaboration de valeurs maîtres et les opérations d'authentification.

De la même manière, l'utilisation du serveur est optionnelle, mais elle permet d'obtenir un niveau de sécurité amélioré et une gestion à distance des dispositifs électroniques. Comme on le conçoit, l'utilisation des indicateurs stockés à distance permet de mettre en œuvre une limitation des fonctionnalités du dispositif électronique à distance.

Par ailleurs, l'utilisation des informations propres à l'utilisateur est optionnelle, bien qu'elle permette d'obtenir un bon niveau de sécurité lorsque l'on vérifie l'intégrité d'un dispositif électronique.

Enfin, on peut noter que la détection d'une erreur à tout moment dans le procédé décrit ci-avant peut résulter du remplacement d'un ou de plusieurs composants pouvant être connecté(s) ou déconnecté(s) par un ou plusieurs autres composants. En effet, en cas de remplacement, les informations propres au nouveau composant sont différentes, les informations propres à l'utilisateur stockées dans le composant sont différentes, et il en découle que la première valeur maître temporaire sera différente de celle attendue. L'authentification n'est donc pas possible dans ce cas.

Des actions peuvent être mises en œuvre si une erreur a été détectée. Il est notamment possible de bloquer complément le dispositif électronique, ou permettre son utilisation partielle (fonctionnement dégradé). Il est également possible de bloquer l'utilisation d'un ou de plusieurs composants pouvant être connectés ou déconnectés. Une liste de composants non autorisés à être utilisés dans des dispositifs électroniques peut alors être élaborée de manière à former une « liste noire ». Dans une telle liste noire, on enregistre les informations et les identifications des composants, et éventuellement les identifiants uniques des dispositifs liés à ces composants (le serveur peut ainsi être utilisé à des fins de traçabilité des composants).

## Revendications

1. Procédé de vérification de l'intégrité d'un dispositif électronique (1) auquel est connecté au moins un composant (3, 4) pouvant être connecté ou déconnecté, le procédé comprenant :
une obtention (D52) d'informations propres audit au moins un composant pouvant être connecté ou déconnecté mémorisées dans ledit composant pouvant être connecté ou déconnecté,
une élaboration (E54) d'une première valeur maître temporaire sur la base desdites informations propres audit au moins un composant pouvant être connecté ou déconnecté,
une authentification (E54) de ladite première valeur maître temporaire utilisant une deuxième valeur maître élaborée préalablement pour en déduire que le dispositif électronique est intègre,
**caractérisé en ce que** le procédé comprenant en outre une obtention (B52) d'informations propres à l'utilisateur du dispositif électronique mémorisées dans ledit composant pouvant être connecté ou déconnecté, et
on déduit l'intégrité du dispositif électronique de ladite authentification de ladite première valeur maître temporaire et d'une authentification des informations propre à l'utilisateur du dispositif électronique en utilisant des informations propre à l'utilisateur du dispositif électronique préalablement obtenues,
les informations propres à l'utilisateur du dispositif électronique mémorisées dans le composant pouvant être connecté ou déconnecté et les informations propre à l'utilisateur du dispositif électronique préalablement obtenues étant élaborées sur la base d'informations biométriques de l'utilisateur et/ou sur la base d'un code personnel de l'utilisateur du dispositif électronique,
les informations propres à l'utilisateur du dispositif électronique préalablement obtenues étant mémorisées dans une mémoire sécurisée du dispositif électronique ou dans une mémoire d'un élément sécurisé du dispositif.

2. Procédé selon la revendication 1, comprenant, préalablement à ladite élaboration de la première valeur maître temporaire, une vérification (D51, E51) d'un indicateur du dispositif électronique qui indique si le dispositif est verrouillé pour un utilisateur.

3. Procédé selon la revendication 1 ou 2, dans lequel lesdites informations propres audit au moins un composant pouvant être connecté ou déconnecté comprennent un identifiant du composant.

4. Procédé selon la revendication 2 ou 3, dans lequel ledit indicateur du dispositif électronique qui indique si le dispositif est verrouillé pour un utilisateur est mémorisé dans une mémoire sécurisée du dispositif électronique ou dans une mémoire d'un élément sécurisé du dispositif ou dans un serveur distant.

5. Procédé selon la revendication 1, dans lequel lesdites informations propres à l'utilisateur préalablement obtenues sont associées à ladite deuxième valeur maître.

6. Procédé selon l'une quelconque des revendications 1 à 5, comprenant une vérification (B52) d'un indicateur du composant pouvant être connecté ou déconnecté qui indique si le composant est associé au dispositif électronique.

7. Procédé selon l'une quelconque des revendications 1 à 6, dans lequel la deuxième valeur maître est mémorisée dans une mémoire sécurisée du dispositif électronique ou dans une mémoire d'un élément sécurisé du dispositif ou dans un serveur distant, et, si la deuxième valeur maître est mémorisée dans le serveur distant, ladite authentification de la première valeur maître temporaire est mise en œuvre par au moins une communication avec ledit serveur distant.

8. Procédé selon l'une quelconque des revendications 1 à 7, dans lequel on vérifie l'intégrité du dispositif préalablement à la mise en œuvre d'au moins une fonction sécurisée du dispositif électronique.

9. Procédé selon l'une quelconque des revendications 1 à 8, mis en œuvre au moins partiellement au moyen d'un environnement d'exécution de confiance.

10. Procédé selon la revendication 9, dans lequel le dispositif est équipé d'un système d'exploitation polyvalent et le procédé comporte une étape initiale de basculement du système d'exploitation polyvalent vers l'environnement d'exécution de confiance.

11. Procédé selon l'une quelconque des revendications 1 à 10, comprenant les étapes préalables suivantes :
une connexion dudit composant pouvant être connecté ou déconnecté au dispositif électronique,
une obtention desdites informations propres audit au moins un composant pouvant être connecté ou déconnecté mémorisées dans ledit composant pouvant être connecté ou déconnecté,
une élaboration de ladite deuxième valeur maître sur la base desdites informations propres audit au moins un composant pouvant être connecté ou déconnecté.

12. Procédé selon la revendication 11 prise dans sa combinaison avec au moins la revendication 2, dans lequel on vérifie que l'indicateur du dispositif électronique qui indique si le dispositif est verrouillé pour un utilisateur indique que le dispositif n'est pas verrouillé pour un utilisateur avant l'élaboration de ladite deuxième valeur maître.

13. Procédé selon la revendication 12 prise dans sa combinaison avec au moins la revendication 6, dans lequel si l'indicateur du dispositif électronique qui indique si le dispositif est verrouillé pour un utilisateur indique que le dispositif n'est pas verrouillé pour un utilisateur, on attribue audit indicateur du composant pouvant être connecté ou déconnecté un état qui indique que le composant est associé au dispositif électronique postérieurement à ladite élaboration de ladite deuxième valeur maître.

14. Procédé selon l'une des revendications 11 à 13, comprenant une élaboration préalable desdites informations propres à l'utilisateur dans laquelle l'utilisateur interagit avec le dispositif électronique, et un enregistrement desdites informations propres à l'utilisateur dans au moins ledit composant pouvant être connecté ou déconnecté.

15. Procédé selon l'une quelconque des revendications 1 à 14, dans lequel on déconnecte ledit composant pouvant être connecté ou déconnecté.

16. Procédé selon la revendication 15 prise dans sa combinaison avec au moins la revendication 6, dans lequel préalablement à ladite déconnexion, on attribue audit indicateur du composant pouvant être connecté ou déconnecté un état qui indique que le composant n'est pas associé au dispositif électronique.

17. Procédé selon la revendication 16, dans lequel pour attribuer audit indicateur du composant pouvant être connecté ou déconnecté un état qui indique que le composant n'est pas associé au dispositif électronique, le procédé comporte :
une élaboration desdites informations propres à l'utilisateur dans laquelle l'utilisateur interagit avec le dispositif électronique, et une comparaison desdites informations propres à l'utilisateur élaborées avec celles préalablement obtenues.

18. Procédé selon l'une quelconque des revendications 1 à 17, dans lequel on détecte une erreur et l'on bloque le dispositif électronique, ou on fait fonctionner le dispositif électronique dans un mode de fonctionnement dégradé, ou on bloque ledit au moins un composant pouvant être connecté ou déconnecté.

19. Procédé selon l'une quelconque des revendications 1 à 18, dans lequel la valeur maître est une valeur d'un type choisi dans le groupe comprenant : une clé, un jeton, le résultat d'une fonction de hachage, et le résultat d'une fonction cryptographique.

20. Dispositif électronique auquel on peut connecter au moins un composant pouvant être connecté ou déconnecté, le dispositif comprenant :
un module (6) d'obtention d'informations propres audit au moins un composant pouvant être connecté ou déconnecté mémorisées dans ledit composant pouvant être connecté ou déconnecté,
un module (7) d'élaboration d'une première valeur maître temporaire sur la base desdites informations propres audit au moins un composant pouvant être connecté ou déconnecté,
un module (8) d'authentification de ladite première valeur maître temporaire utilisant une deuxième valeur maître élaborée préalablement pour en déduire que le dispositif électronique est intègre,
**caractérisé en ce que** le dispositif étant en outre configuré pour mettre en œuvre :
une obtention (B52) d'informations propres à l'utilisateur du dispositif électronique mémorisées dans ledit composant pouvant être connecté ou déconnecté, et
une déduction de l'intégrité du dispositif électronique de ladite authentification de ladite première valeur maître temporaire et d'une authentification des informations propre à l'utilisateur du dispositif électronique en utilisant des informations propre à l'utilisateur du dispositif électronique préalablement obtenues,
les informations propres à l'utilisateur du dispositif électronique mémorisées dans le composant pouvant être connecté ou déconnecté et les informations propre à l'utilisateur du dispositif électronique préalablement obtenues étant élaborées sur la base d'informations biométriques de l'utilisateur et/ou sur la base d'un code personnel de l'utilisateur du dispositif électronique,
les informations propres à l'utilisateur du dispositif électronique préalablement obtenues étant mémorisées dans une mémoire sécurisée du dispositif électronique ou dans une mémoire d'un élément sécurisé du dispositif.

21. Dispositif électronique selon la revendication 20, dans lequel le dispositif électronique est un dispositif électronique mobile.

## Patentansprüche

1. Verfahren zum Überprüfen der Integrität einer elektronischen Vorrichtung (1), an die mindestens eine Komponente (3, 4) angeschlossen wird, die angeschlossen oder getrennt werden kann, wobei das Verfahren aufweist:
ein Erhalten (D52) von Informationen, die für die mindestens eine Komponente spezifisch sind, die angeschlossen oder getrennt werden kann, die in der Komponente gespeichert werden, die angeschlossen oder getrennt werden kann,
ein Erarbeiten (E54) eines ersten temporären Masterwerts auf der Grundlage der Informationen, die für die mindestens eine Komponente spezifisch sind, die angeschlossen oder getrennt werden kann,
ein Authentifizieren (E54) des ersten temporären Masterwerts unter Verwendung eines zweiten Masterwerts, der zuvor erarbeitet wird, um daraus abzuleiten, dass die elektronische Vorrichtung unversehrt ist,
**dadurch gekennzeichnet, dass** das Verfahren ferner ein Erhalten (B52) von Informationen aufweist, die für den Benutzer der elektronischen Vorrichtung spezifisch sind, die in der Komponente gespeichert werden, die angeschlossen oder getrennt werden kann, und
die Unversehrtheit der elektronischen Vorrichtung von dem Authentifizieren des ersten temporären Masterwerts und einem Authentifizieren der Informationen, die für den Benutzer der elektronischen Vorrichtung spezifisch sind, unter Verwendung der Informationen, die für den Benutzer der elektronischen Vorrichtung spezifisch sind, die zuvor erhalten worden sind, abgeleitet wird,
wobei die Informationen, die für den Benutzer der elektronischen Vorrichtung spezifisch sind, die in der Komponente gespeichert werden, die angeschlossen oder getrennt werden kann, und die Informationen, die für den Benutzer der elektronischen Vorrichtung spezifisch sind, die zuvor erhalten worden sind, auf der Grundlage von biometrischen Informationen des Benutzers und/oder auf der Grundlage von einem persönlichen Code des Benutzers der elektronischen Vorrichtung verarbeitet werden,
wobei die Informationen, die für den Benutzer der elektronischen Vorrichtung spezifisch sind, die zuvor erhalten worden sind, in einem gesicherten Speicher der elektronischen Vorrichtung oder in einem Speicher eines gesicherten Elements der Vorrichtung gespeichert werden.

2. Verfahren nach Anspruch 1, umfassend ein Überprüfen (D51, E51) eines Anzeigers der elektronischen Vorrichtung, der anzeigt, ob die Vorrichtung für einen Benutzer gesperrt ist, vor dem Erarbeiten des ersten temporären Masterwerts.

3. Verfahren nach Anspruch 1 oder 2, wobei die Informationen, die für mindestens eine Komponente spezifisch sind, die angeschlossen oder getrennt werden kann, eine Kennung der Komponente aufweisen.

4. Verfahren nach Anspruch 2 oder 3, wobei der Anzeiger der elektronischen Vorrichtung, der anzeigt, ob die Vorrichtung für einen Benutzer gesperrt ist, in einem gesicherten Speicher der elektronischen Vorrichtung oder in einem Speicher eines gesicherten Elements der Vorrichtung oder in einem Remote-Server gespeichert wird.

5. Verfahren nach Anspruch 1, wobei die Informationen, die für den Benutzer spezifisch sind, die zuvor erhalten worden sind, dem zweiten Masterwert zugeordnet werden.

6. Verfahren nach einem der Ansprüche 1 bis 5, umfassend ein Überprüfen (B52) eines Anzeigers der Komponente, die angeschlossen oder getrennt werden kann, die anzeigt, ob die Komponente der elektronischen Vorrichtung zugeordnet wird.

7. Verfahren nach einem der Ansprüche 1 bis 6, wobei der zweite Masterwert in einem gesicherten Speicher der elektronischen Vorrichtung oder in einem Speicher eines gesicherten Elements der Vorrichtung oder in einem Remote-Server gespeichert wird und, wenn der zweite Masterwert in dem Remote-Speicher gespeichert wird, das Authentifizieren des ersten temporären Masterwerts durch mindestens eine Kommunikation mit dem Remote-Server umgesetzt wird.

8. Verfahren nach einem der Ansprüche 1 bis 7, wobei die Unversehrtheit der Vorrichtung vor dem Umsetzen mindestens einer gesicherten Funktion der elektronischen Vorrichtung überprüft wird.

9. Verfahren nach einem der Ansprüche 1 bis 8, das mindestens teilweise mittels einer vertrauenswürdigen Ausführungsumgebung umgesetzt wird.

10. Verfahren nach Anspruch 9, wobei die Vorrichtung mit einem Allzweck-Betriebssystem ausgestattet ist und das Verfahren einen anfänglichen Schritt des Umstellens von dem Allzweck-Betriebssystem auf die vertrauenswürdige Ausführungsumgebung aufweist.

11. Verfahren nach einem der Ansprüche 1 bis 10, umfassend die folgenden vorausgehenden Schritte:
ein Anschließen der Komponente, die angeschlossen oder von getrennt werden kann, an die elektronische Vorrichtung,
ein Erhalten der Informationen, die für die mindestens eine Komponente spezifisch sind, die angeschlossen oder getrennt werden kann, die in der Komponente gespeichert werden, die angeschlossen oder getrennt werden kann,
ein Erarbeiten des zweiten Masterwerts auf der Grundlage der Informationen, die für die mindestens eine Komponente spezifisch sind, die angeschlossen oder getrennt werden kann.

12. Verfahren nach Anspruch 11 in Kombination mit mindestens dem Anspruch 2, wobei überprüft wird, dass der Anzeiger der elektronischen Vorrichtung, der anzeigt, ob die Vorrichtung für einen Benutzer gesperrt ist, vor dem Erarbeiten des zweiten temporären Masterwerts anzeigt, dass die Vorrichtung für einen Benutzer nicht gesperrt ist.

13. Verfahren nach Anspruch 12 in Kombination mit mindestens dem Anspruch 6, wobei, wenn der Anzeiger der elektronischen Vorrichtung, der anzeigt, ob die Vorrichtung für einen Benutzer gesperrt ist, anzeigt, dass die Vorrichtung für einen Benutzer nicht gesperrt ist, dem Anzeiger der Komponente, die angeschlossen oder getrennt werden kann, ein Zustand zugewiesen wird, der angibt, dass die Komponente nach dem Erarbeiten des zweiten temporären Masterwerts der elektronischen Vorrichtung zugeordnet wird.

14. Verfahren nach einem der Ansprüche 11 bis 13, umfassend ein vorhergehendes Bearbeiten der Informationen, die für den Benutzer spezifisch sind, wobei der Benutzer mit der elektronischen Vorrichtung interagiert, und ein Speichern der Informationen, die für den Benutzer spezifisch sind, in mindestens der Komponente, die angeschlossen oder getrennt werden kann.

15. Verfahren nach einem der Ansprüche 1 bis 14, wobei die Komponente, die angeschlossen oder getrennt werden kann, getrennt wird.

16. Verfahren nach Anspruch 15 in Kombination mit mindestens dem Anspruch 6, wobei vor dem Trennen dem Anzeiger der Komponente, die angeschlossen oder getrennt werden kann, ein Zustand zugewiesen wird, der angibt, dass die Komponente der elektronischen Vorrichtung nicht zugeordnet wird.

17. Verfahren nach Anspruch 16, wobei, um dem Anzeiger der Komponente, die angeschlossen oder getrennt werden kann, einen Zustand zuzuweisen, der angibt, dass die Komponente der elektronischen Vorrichtung nicht zugeordnet wird, das Verfahren aufweist:
ein Bearbeiten der Informationen, die für den Benutzer spezifisch sind, wobei der Benutzer mit der elektronischen Vorrichtung interagiert, und ein Vergleichen der bearbeiteten Informationen, die für den Benutzer spezifisch sind, mit jenen, die zuvor erhalten worden sind.

18. Verfahren nach einem der Ansprüche 1 bis 17, wobei ein Fehler erfasst wird und die elektronische Vorrichtung blockiert wird oder die elektronische Vorrichtung in einem eingeschränkten Betriebsmodus betrieben wird oder die mindestens eine Komponente, die angeschlossen oder getrennt werden kann, blockiert wird.

19. Verfahren nach einem der Ansprüche 1 bis 18, wobei der Masterwert ein Wert eines Typs ist, der aus der Gruppe ausgewählt wird, umfassend: einen Schlüssel, ein Token, das Ergebnis einer Hash-Funktion und das Ergebnis einer kryptografischen Funktion.

20. Elektronische Vorrichtung, an die mindestens eine Komponente angeschlossen werden kann, die angeschlossen oder getrennt werden kann, wobei die Vorrichtung aufweist:
ein Modul (6) zum Erhalten von Informationen, die für die mindestens eine Komponente spezifisch sind, die angeschlossen oder getrennt werden kann, die in der Komponente gespeichert sind, die angeschlossen oder getrennt werden kann,
ein Modul (7) zum Erarbeiten eines ersten temporären Masterwerts auf der Grundlage der Informationen, die für die mindestens eine Komponente spezifisch sind, die angeschlossen oder getrennt werden kann,
ein Modul (8) zum Authentifizieren des ersten temporären Masterwerts unter Verwendung eines zweiten Masterwerts, der zuvor erarbeitet wird, um daraus abzuleiten, dass die elektronische Vorrichtung unversehrt ist,
**dadurch gekennzeichnet, dass** die Vorrichtung ferner konfiguriert ist, um umzusetzen:
ein Erhalten (B52) von Informationen, die für den Benutzer der elektronischen Vorrichtung spezifisch sind, die in der Komponente gespeichert sind, die angeschlossen oder getrennt werden kann, und
ein Ableiten der Unversehrtheit der elektronischen Vorrichtung von dem Authentifizieren des ersten temporären Masterwerts und einem Authentifizieren der Informationen, die für den Benutzer der elektronischen Vorrichtung spezifisch sind, unter Verwendung der Informationen, die für den Benutzer der elektronischen Vorrichtung spezifisch sind, die zuvor erhalten worden sind,
wobei die Informationen, die für den Benutzer der elektronischen Vorrichtung spezifisch sind, die in der Komponente gespeichert sind, die angeschlossen oder getrennt werden kann, und die Informationen, die für den Benutzer der elektronischen Vorrichtung spezifisch sind, die zuvor erhalten worden sind, auf der Grundlage von biometrischen Informationen des Benutzers und/oder auf der Grundlage von einem persönlichen Code des Benutzers der elektronischen Vorrichtung verarbeitet werden,
wobei die Informationen, die für den Benutzer der elektronischen Vorrichtung spezifisch sind, die zuvor erhalten worden sind, in einem gesicherten Speicher der elektronischen Vorrichtung oder in einem Speicher eines gesicherten Elements der Vorrichtung gespeichert sind.

21. Elektronische Vorrichtung nach Anspruch 20, wobei die elektronische Vorrichtung eine mobile elektronische Vorrichtung ist.

## Claims

1. A method of verifying the integrity of an electronic device (1) having connected thereto at least one connectable or disconnectable component (3, 4), the method comprising:
obtaining (D52) information specific to said at least one connectable or disconnectable component, the information being stored in said connectable or disconnectable component;
preparing (E54) a temporary first master value on the basis of said information specific to said at least one connectable or disconnectable component; and
authenticating (E54) said temporary first master value by using a previously-prepared second master value in order to determine the integrity of the electronic device,
**characterized in that** the method further comprising obtaining (B52) information specific to the user of the electronic device as stored in said connectable or disconnectable component; and
deducing the integrity of the electronic device from said authentication of said temporary first master value and from authentication of information specific to the user of the electronic device by using previously-obtained information specific to the user of the electronic device,
the information specific to the user of the electronic device and stored in the connectable or disconnectable component and the previously-obtained information specific to the user of the electronic device being prepared on the basis of biometric information of the user and/or on the basis of a personal code of the user of the electronic device,
the previously-obtained information specific to the user of the electronic device being stored in a secure memory of the electronic device or in a memory of a secure element of the electronic device or in a remote server.

2. A method according to claim 1, including, prior to said preparing the temporary first master value, verifying (D51, E51) an indicator of the electronic device that indicates whether the electronic device is locked for one user.

3. A method according to claim 1 or claim 2, wherein said information specific to said at least one connectable or disconnectable component includes an identifier of the component.

4. A method according to claim 2 or claim 3, wherein said indicator of the electronic device that indicates whether the device is locked for one user is stored in a secure memory of the electronic device or in a memory of a secure element of the device or in a remote server.

5. A method according to claim 1, wherein said previously-obtained information specific to the user is associated with said second master value.

6. A method according to any one of claims 1 to 5, including verifying (B52) an indicator of the connectable or disconnectable component that indicates whether the component is associated with the electronic device.

7. A method according to any one of claims 1 to 6, wherein the second master value is stored in a secure memory of the electronic device, or in a memory of a secure element of the device, or in a remote server, and if the second master value is stored in the remote server, said authentication of the temporary first master value is performed by at least one communication with said remote server.

8. A method according to any one of claims 1 to 7, wherein the integrity of the device is verified prior to performing at least one secure function of the electronic device.

9. A method according to any one of claims 1 to 8, that is performed at least in part by means of a trusted execution environment.

10. A method according to claim 9, wherein the device is provided with a rich operating system and the method includes an initial step of switching from the rich operating system to the trusted execution environment.

11. A method according to any one of claims 1 to 10, including the following prior steps:
connecting said connectable or disconnectable component to the electronic device;
obtaining said information specific to said at least one connectable or disconnectable component stored in said connectable or disconnectable component; and
preparing said second master value on the basis of said information specific to said at least one connectable or disconnectable component.

12. A method according to claim 11 taken in combination with at least claim 2, wherein it is verified that the indicator of the electronic device that indicates whether the device is locked for one user indicates that the device is not locked for one user prior to preparing said second master value.

13. A method according to claim 12 taken in combination with at least claim 6, wherein if the indicator of the electronic device that indicates whether the device is locked for one user indicates that the device is not locked for one user, said indicator of the connectable or disconnectable component is given a state that indicates that the component is associated with the electronic device after preparing said master value.

14. A method according to any one of claims 11 to 13, including prior preparation of said information specific to the user in which the user interacts with the electronic device, and storing said information specific to the user in at least said connectable or disconnectable component.

15. A method according to any one of claims 1 to 14, wherein said connectable or disconnectable component is disconnected.

16. A method according to claim 15 taken in combination with at least claim 6, wherein prior to said disconnection, said indicator of the connectable or disconnectable component is given a state that indicates that the component is not associated with the electronic device.

17. A method according to claim 16, wherein in order to allocate to said indicator of the connectable or disconnectable component a state that indicates that the component is not associated with the electronic device, the method includes:
preparing said information specific to the user in which the user interacts with the electronic device, and comparing said information specific with the user as prepared with the information as previously obtained.

18. A method according to any one of claims 1 to 17, wherein an error is detected and the electronic device is blocked, or the electronic device is caused to operate in a degraded mode of operation, or said at least one connectable or disconnectable component is blocked.

19. A method according to any one of claims 1 to 18, wherein the master value is a value of a type selected from the group comprising: a key; a token; the result of a hashing function; and the result of a cryptographic function.

20. An electronic device to which at least one connectable or disconnectable component can be connected, the device comprising:
a module (6) for obtaining information specific to said at least one connectable or disconnectable component and stored in said connectable or disconnectable component;
a module (7) for preparing a temporary first master value on the basis of said information specific to said at least one connectable or disconnectable component; and
a module (8) for authenticating said temporary first master value by using a previously-prepared second master value in order to determine the integrity of the electronic device,
chararecterized in that the device being further configured to perform:
obtaining (B52) information specific to the user of the electronic device as stored in said connectable or disconnectable component; and
deducing the integrity of the electronic device from said authentication of said temporary first master value and from authentication of information specific to the user of the electronic device by using previously-obtained information specific to the user of the electronic device,
the information specific to the user of the electronic device and stored in the connectable or disconnectable component and the previously-obtained information specific to the user of the electronic device being prepared on the basis of biometric information of the user and/or on the basis of a personal code of the user of the electronic device,
the previously-obtained information specific to the user of the electronic device being stored in a secure memory of the electronic device or in a memory of a secure element of the electronic device or in a remote server.

21. An electronic device according to claim 20, wherein the electronic device is a mobile electronic device.
